# FASCICULE DE BREVET EUROPEEN

(11) **EP 3 275 912 B1**
(45) Date de publication et mention de la délivrance du brevet: **02.01.2019**
(21) Numéro de dépôt: 17305850.4
(22) Date de dépôt: 03.07.2017
(51) Int. Cl.: C08G 18/76, C08G 18/36, C08G 18/00, C08G 18/22, C08G 18/18, C08G 18/09, C08G 101/00

(54) **PROCÉDÉ DE FABRICATION D'UNE MOUSSE POLYURÉTHANE-MODIFIÉE, MOUSSE OBTENUE ET UTILISATIONS**
HERSTELLUNGSVERFAHREN EINES MODIFIZIERTEN POLYURETHANSCHAUMSTOFFS, SO ERHALTENER SCHAUMSTOFF UND DESSEN VERWENDUNGEN
METHOD FOR MANUFACTURING A MODIFIED POLYURETHANE FOAM, FOAM OBTAINED AND USES

(30) Priorité: 28.07.2016 FR 1670413
(43) Date de publication de la demande: 31.01.2018
(73) Titulaire: SOPREMA (SAS), 67100 Strasbourg (FR); Université de Strasbourg (Etablissement Public National à Caractère Scientifique, Culturel et Professionnel), 67000 Strasbourg (FR); Centre National de la Recherche Scientifique (Établissement Publique National à Caractère Scientifique et Technologique), 75016 Paris (FR)
(72) Inventeur: ARBENZ, Alice, 01800 Rignieux le Franc (FR); LAURICHESSE, Stéphanie, 67000 STRASBOURG (FR); PERRIN, Rémi, 67530 BOERSCH (FR); BINDSCHEDLER, Pierre Etienne, 77694 Kehl (DE); AVEROUS, Luc, 67370 WIWERSHEIM (FR)
(74) Mandataire: Nuss, Laurent

(56) Documents cités:
- EP-A1- 2 881 413
- WO-A1-2009/045926
- US-A1- 2013 337 208

## Description

La présente invention concerne le domaine de la fabrication de mousses de type polyuréthane et leurs utilisations, en particulier dans le domaine de l'isolation, notamment pour l'isolation thermique des bâtiments, et en particulier les produits isolants sous forme de mousses rigides et les panneaux isolants rigides qui en découlent.

Les matériaux actuellement utilisés dans le domaine de l'isolation sont principalement réalisés à base de polymères dérivés du pétrole.

Or, les mousses d'isolation synthétiques actuelles présentent des inconvénients pénalisants dans le contexte du développement durable.

En effet, ces produits connus utilisent des matériaux dérivés des matières premières fossiles et non renouvelables, nécessitent des quantités d'énergie importantes pour leur obtention et leur transformation, et/ou sont difficilement, voire non recyclables.

Plus précisément, l'utilisation de matières synthétiques implique souvent l'utilisation de matériaux ou de dérivés organiques issus de la pétrochimie avec de nombreuses et coûteuses étapes de production.

Ces différents facteurs négatifs sont particulièrement pénalisants dans le cadre de l'ICV (Inventaire du Cycle de Vie) de produits, et confèrent à ces derniers un résultat d'ACV (Analyse du Cycle de Vie) très peu favorable. En effet, l'impact sur les émissions de gaz à effet de serre (GWP) d'une mousse d'isolation synthétique (XPS, PSE ou PU) est environ 10 fois plus élevé que celui des isolants naturels (fibres de bois, ouate de cellulose) : 200 g eq. CO₂ / 20 g eq. CO₂ pour une résistance thermique et une application équivalente (source : FDES présentes sur la base INIES en juin 2016).

Par ailleurs, la volatilité des cours du pétrole a également un impact direct sur les coûts des matières premières utilisées.

On connait depuis fort longtemps l'utilisation de mousses polyuréthane (PU) synthétiques dans le domaine de l'isolation. Ces dernières sont issues de la réaction entre des isocya nates et des polyols en présence d'un agent gonflant.

Dans les procédés de fabrication de ces mousses actuellement mis en oeuvre, on peut déjà utiliser des matières naturelles renouvelables à la place du ou d'une partie des matières issues de ressources fossiles ou des produits pétroliers dérivés.

En particulier, on connait l'utilisation d'huiles végétales que l'on traite pour les transformer en polyols. Les huiles végétales sont majoritairement constituées par les triglycérides qui sont des triesters d'acides gras et de glycérol. La formule chimique générale est la suivante (Figure 1) :

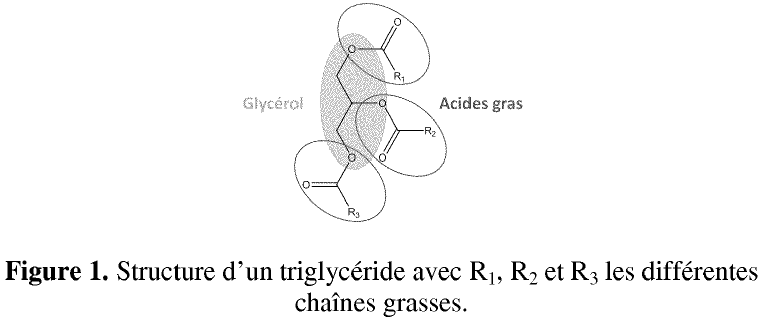

La composition des acides gras dans les triglycérides varie et dépend de la source végétale, de la saison et des conditions de cultures (humidité, ensoleillement, nature du sol...).

Les huiles les plus couramment utilisées comme les huiles de soja, de lin, de colza ou de tournesol sont essentiellement composées d'acides gras possédant une chaîne aliphatique de 18 carbones. Par ailleurs, la position des insaturations varie ainsi que leur nombre. Ces doubles liaisons ont un impact sur les propriétés chimiques et physiques des huiles.

Pour pouvoir caractériser le nombre d'insaturations présentes dans un triglycéride, l'indice d'iode est utilisé. Il est déterminé par le dosage des doubles liaisons par l'iode. La méthode expérimentale classique de mesure de l'indice d'iode I_{iode} est la « Méthode de Wijs ». Les huiles peuvent ainsi être classées selon trois catégories en fonction de la valeur cet indice (Table 1).

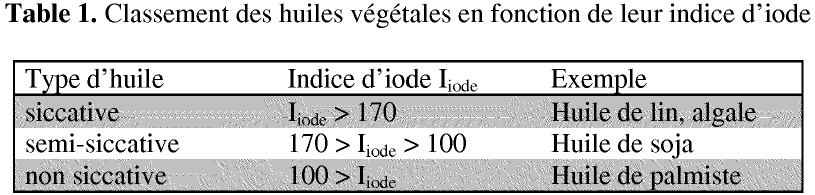

En fonction de leur origine, les huiles végétales ont des compositions différentes en acides gras et donc un indice d'acide différent (Table 2). La caractéristique structurale la plus importante, ainsi que le site réactif des huiles, sont les insaturations.

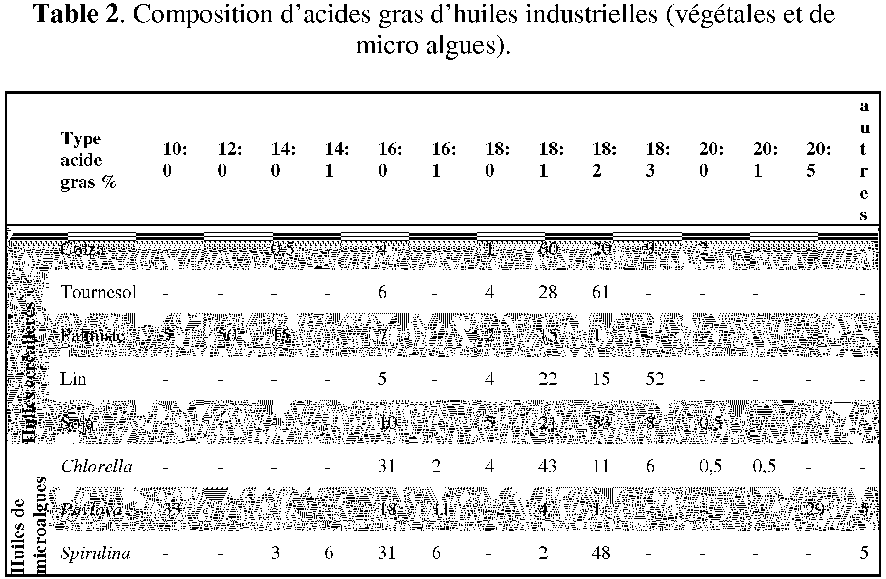

L'utilisation d'huile végétale pour faire des polymères n'est pas nouvelle. Cependant, durant ces dernières années, une problématique spécifique liée à la compétition d'une partie de cette ressource avec l'alimentaire est apparue. Cette problématique a favorisé l'émergence des microalgues comme sources de triglycérides.

Les principales raisons pour lesquelles les microalgues représentent un intérêt supplémentaire par rapport aux cultures végétales sont :
(i) Une efficacité améliorée couplée à une réduction des coûts : les coûts de récolte et de transport sont généralement plus bas que ceux pour les cultures céréalières.
(ii) La culture des microalgues n'entre pas en compétition avec d'autres cultures utilisées pour la production alimentaire et elle demande une surface plus modérée comparé à d'autres sources. Les microalgues peuvent être cultivées dans des environnements totalement inadaptés pour d'autres récoltes et produisent souvent un rendement bien supérieur.
(iii) La plupart des microalgues ont des taux de lipides compris entre 20 et 50 % de leur poids sec et le temps nécessaire pour doubler la quantité de biomasse varie de 4h à quelques jours.
(iv) D'autres produits que les lipides tels que des sucres, des protéines, etc. peuvent être valorisés. De plus, cette culture ne nécessite ni herbicides, ni pesticides.
(v) Les microalgues peuvent fixer le CO₂ participant ainsi à la réduction les taux atmosphériques.

La quasi-totalité des transformations de triglycérides en polyols commence par une extraction des acides gras puis des modifications chimiques de ces acides gras en vue d'y greffer des fonctions hydroxyle (alcool). Les principales voies de modifications sont les suivantes :
- Polyols préparés par époxydation suivie de l'ouverture de cycle :
   Généralement, les polyols dérivés des huiles végétales sont préparés par une époxydation suivie d'une ouverture de cycle. Les propriétés finales des PU obtenus à partir de ces polyols dépendent de nombreux paramètres tels que la composition en acides gras des triglycérides, le pourcentage d'époxydation (lors du passage par les époxydes), et enfin, la position et le nombre de fonctions OH.
- Polyols préparés par hydroformylation et réduction :
   Contrairement à l'ouverture des époxydes qui donne des alcools secondaires, l'hydroformylation permet de synthétiser des alcools primaires qui sont plus réactifs que ceux qui sont secondaires.
Polyols obtenus par ozonolyse et réduction :
Par cette voie, les polyols obtenus sont composés au maximum de trois OH par triglycéride puisque situés au bout de chaque chaîne grasse.

On fait ensuite réagir de façon classique les fonctions hydroxyle des polyols présentes avec des groupements isocyanate pour former des polyuréthanes, par exemple sous forme de mousses qui s'expansent grâce à la présence d'un agent gonflant (chimique ou physique) et se qui rigidifient par la suite pour former l'isolant désiré.

Un dérivé de ces mousses en polyuréthane est la mousse de polyisocyanurate. La différence entre les deux réside essentiellement dans le ratio entre les fonctions alcool et isocyanate utilisé (ratio de 1/1 pour les polyuréthanes et 1/3 pour les polyisocyanurates). Les mousses de polyisocyanurate ont des propriétés de tenue au feu améliorées.

Toutefois, ces procédés de transformation des huiles végétales en polyols présentent plusieurs inconvénients dans la mesure où ils sont complexes et donc relativement coûteux car difficilement contrôlables en termes de rendements et de pureté des produits obtenus.

De façon inattendue et surprenante, les inventeurs de la présente demande ont découvert qu'il était possible de fabriquer des mousses polyuréthane-modifiée isocyanurate dite « PUIR » directement à partir d'huiles sans devoir passer nécessairement soit, par des étapes d'extraction des acides gras puis par une étape de formation de polyols en hydroxylant lesdits acides gras, soit par l'époxydation des huiles puis l'ouverture des cycles époxy.

De plus, l'utilisation d'huiles spécifiques permet d'obtenir des mousses particulièrement avantageuses, notamment lorsqu'on utilise des huiles issues de microalgues. En effet, ces huiles ont des profils en termes de longueurs des chaînes carbonées des acides gras et en termes d'insaturations (nombre et/ou emplacements des doubles liaisons sur les branches hydrocarbonées desdits acides gras) particulièrement intéressantes pour fabriquer les mousses souhaitées, à fort degré de réticulation, ce sans faire appel à des produits synthétiques comme ceux issus du pétrole et tout en conservant des propriétés physico-chimiques satisfaisantes voire améliorées pour les mousses obtenues.

Prenant le contre-pied des procédés classiques, la présente invention propose donc un procédé de fabrication d'une mousse polyuréthane-modifiée isocyanurate dite « PUIR », caractérisé en ce qu'il comprend les étapes consistant à :
- a) fournir une huile ou un mélange d'huiles dont au moins 50 % en poids des acides gras ont une chaîne carbonée en C18 ou plus et dont les acides gras présentent un indice d'iode global (I_{iode}) d'au moins 100 g d'I₂/100 g, de préférence d'au moins 125 g d'I₂/100 g et plus préférentiellement d'au moins 150 g d'I₂/100 g,
- b) époxyder au moins 50 % des doubles liaisons présentes dans ladite huile ou ledit mélange afin de former les époxydes correspondants,
- c) faire réagir directement, in situ, les huiles époxydées obtenues précédemment avec des groupements isocyanates ou diisocyanates pour obtenir des dérivés d'oxazolidones correspondants, ce sans passer par la formation intermédiaire de polyols issus des époxydes, en présence d'au moins un catalyseur adapté et d'au moins un agent gonflant, ce afin d'obtenir ladite mousse polyuréthane-modifiée isocyanurate "PUIR".

Avantageusement, le procédé selon l'invention est caractérisé en ce que l'huile utilisée à l'étape a) est une huile présentant au moins 25 % en poids d'acides gras avec une chaîne carbonée au moins en C20 (c'est-à-dire des chaînes avec au moins 20 atomes de carbone) et dont les acides gras présentent un indice d'iode global I_{iode} d'au moins 200 g d'I₂/100 g.

Selon une autre caractéristique, l'huile utilisée à l'étape a) comprend au moins une huile obtenue à partir d'au moins une microalgue.

Avantageusement, la ou les microalgues sont choisies dans le groupe formé par : schizochytrium sp., chlorella sp., porphyridium cruentum, pavlova et spirulina.

Selon un autre mode de réalisation, l'huile utilisée à l'étape a) comprend au moins une huile végétale, de préférence de l'huile de colza, de l'huile de tournesol, de l'huile de lin et/ou de l'huile de soja.

Selon une variante, l'étape b) d'époxydation se fait à chaud, à une température comprise entre 40 °C et 100 °C pendant au moins 2 heures en utilisant un mélange d'eau oxygénée et d'acide acétique.

La méthode utilisée pour réaliser l'époxydation consiste à former de l'acide peracétique in-situ par la réaction entre l'acide acétique et le peroxyde d'hydrogène. Cette dernière est avantageusement catalysée par une résine échangeuse d'ions à 60 °C dans du toluène durant 12 h (Figure 2). Les taux de conversion en époxydes peuvent alors atteindre près de 100 %.

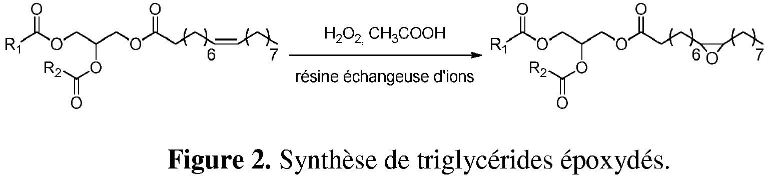

Un autre procédé couramment utilisé fait réagir de l'acide peroxoacétique et l'acide peroxoformique sur les huiles végétales. Ce procédé permet d'atteindre des taux de conversion proche de 90 %.

De façon préférée, l'étape c) se fait à température ambiante, soit environ 20 °C, c'est-à-dire sans chauffage, l'exothermie de la réaction permettant à elle seule d'initier la réaction de formation des oxazolidones.

En effet, lorsque des fonctions isocyanate sont chauffées en présence de groupements époxydes, des cycles oxazolidones peuvent se former en même temps que la formation d'isocyanurates et l'homopolymérisation des époxydes. On sait que les principales réactions se font les unes après les autres au fur et à mesure que la température augmente : dans un premier temps à lieu la formation d'isocyanurates (Figure 3, réaction ***1***), ensuite la réaction entre les époxydes et les isocyanates se produit pour donner les cycles oxazolidones (Figure 3, réaction ***2***), enfin les isocyanurates se décomposent en réagissant aves les époxydes pour former des cycles oxazolidones (Figure 3, réaction ***3***).

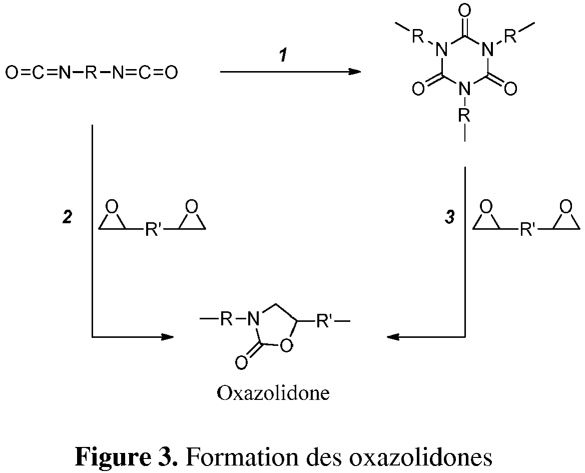

Les catalyseurs utilisés couramment pour ce type de réaction sont l'imidazole et les amines tertiaires.

Selon un autre mode de réalisation, on ajoute à l'étape c) un ou plusieurs polyols extérieurs.

Avantageusement, les groupements isocyanates ou diisocyanates de l'étape c) sont fournis par des isocyanates ou diisocyanates aromatiques, notamment du MDI ou du TDI.

La présente invention a également pour objet une mousse « PUIR » susceptible d'être obtenue par la mise en oeuvre du procédé selon l'invention.

De façon remarquable, la mousse « PUIR » obtenue par la mise en oeuvre du procédé selon l'invention est caractérisée en ce qu'elle contient au moins 10 % en masse d'une huile issue de microalgue(s).

Par ailleurs, la mousse « PUIR » obtenue par la mise en oeuvre du procédé selon l'invention est caractérisée en ce qu'elle présente un taux de cellules fermées supérieur à 90 %.

Enfin, la présente invention a encore pour objet l'utilisation d'une mousse « PUIR » selon l'invention comme matériau d'isolation rigide, en particulier comme matériau d'isolation thermique rigide pour toitures, de préférence sous forme de panneaux d'isolation thermique rigides.

L'invention sera mieux comprise, grâce à la description ci-après, qui se rapporte à des modes de réalisation préférés, donnés à titre d'exemples non limitatifs.

Le fait d'utiliser une huile d'origine renouvelable avec peu de transformation et peu ou pas du tout de polyols synthétiques permet notamment :
(i) d'améliorer l'analyse de cycle de vie et la fiche de données environnementales des membranes d'étanchéité,
(ii) d'être en parfaite adéquation avec la prise de conscience sociétale sur l'environnement (Grenelle de l'environnement),
(iii) d'être indépendant de l'approvisionnement et du prix de ressources fossiles,
(iv) d'utiliser des ressources renouvelables disponibles, en particulier des ressources qui n'entrent pas en compétition avec des denrées utilisés dans d'autres domaines, en particulier dans l'alimentation humaine et/ou animale (soja, maïs, tournesol...),
(v) d'avoir des matériaux stables thermiquement à plus haute température, ceci étant dû au fait que les liaisons oxazolidone sont thermiquement plus stables que les liaisons uréthanne ou isocyanurate, et
(vi) d'avoir des prix de mousses réduits.

Les composés réactifs (insaturations sur les chaînes des acides gras) présents dans les huiles naturelles utilisées ont donc l'avantage de provenir de ressources renouvelables, disponibles en quantité industrielle et à des prix compétitifs, ces composés étant, par exemple, présents en grande proportion dans les huiles de colza ou les micro-algues des familles des schizochytrium ou des spirulines.

### EXEMPLES : Fabrication d'une mousse selon l'invention Epoxydation d'huiles naturelles renouvelables :

Choix des huiles : Huile de Colza « Radia 6101 » de la société Oleon avec un I_{iode} = 133 g d'I₂ / 100 g et huile extraite de la microalgue schizochytrium sp. avec un I_{iode} de 266 g d'I₂ / 100 g.
Les huiles sont totalement epoxydées de façon classique par la méthode de formation in-situ de l'acide paracétique selon le procédé suivant :
Dans un réacteur sont mélangés les huiles avec du toluène, de l'Amberlite IR-120 H (résine échangeuse de cations) et de l'acide acétique. Les ratios molaires entre les insaturations de l'huile /Amberlite/ acide acétique sont les suivants : 1/0,5/0,5 La solution est agitée à 70 °C et 1,5 mol d'une solution de peroxyde d'hydrogène à 30 % est lentement ajoutée au milieu. Une fois ajoutée, la solution est agitée pendant 7h à 70 °C. Les étapes de purification, filtration puis évaporation du solvant sont ensuite réalisées. Nous obtenons ainsi des huiles de colza ou d'algues epoxydées (respectivement HCE et HAE).

### Réalisation de la mousse :

L'isocyanate utilisé est un pMDI de la société Wanhua (Wannate PM-700). On commence par mélanger (en % massiques de la formule totale) avec un mélangeur à hélice, l'huile epoxydée susvisée, un éventuel polyol avec un tensioactif siliconé (1 %) avec des catalyseurs DMCHA et de l'octoate de potassium (0,8 %), un agent gonflant physique tel que l'isopentane (6 %) ainsi qu'un agent gonflant chimique tel que l'eau (0,5 %). Une fois l'émulsion réalisée, on rajoute l'isocyanate dans un ratio molaire Epoxy - hydroxyle éventuel / isocyanate = 3.
Le moussage se fait librement. La réactivité et les caractéristiques des mousses sont comparées à une mousse de référence faite avec le polyol de glycérol oxypropylé (PO) connu sous la dénomination « ADIANSOL GO 360 » de la société CECA.

### Résultats:

| | Référence : Polyol (PO) | Ratio PO / HCE : 75/25 | Ratio PO /HAE : 75/25 | Ratio PO /HAE : 10/90 |
|---|---|---|---|---|
| Teneur en biosourcé de la mousse | 4 | 9 | 8 | 29 |
| Temps de crème (s) | 20 | 24 | 22 | 34 |
| Temps de fil (s) | 129 | 165 | 160 | 225 |
| Temps hors poisse (s) | 238 | 450 | 375 | 535 |
| Taux de cellules fermées (%) | 93 | 92 | 93 | 85 |
| Taille médiane des cellules (µm) | 374 | 441 | 379 | 450 |
| Stabilité thermique (°C) pic ATG sous azote | 310 | 330 | 335 | 350 |

Dans les conditions industrielles d'une ligne de production de panneaux isolants en mousse rigide, les composants sont mélangés dans une tête haute pression (200 bars) à 18 °C. Le mélange est répandu sur un parement en aluminium de 75 µm et entre dans une zone de conformation de l'épaisseur. Un parement aluminium est déroulé en surface de la mousse afin d'avoir un panneau d'isolation thermique de type connu sous la dénomination « Efigreen Acier » de la société SOPREMA.

De façon avantageuse, on utilise la mousse obtenue dans un panneau rigide d'isolation thermique pour des applications dans le bâtiment. Ce dernier peut être utilisé à son tour pour isoler des sols, murs ou toitures, etc.

Bien entendu, l'invention n'est pas limitée aux modes de réalisation décrits.

## Revendications

1. Procédé de fabrication d'une mousse polyuréthane-modifiée isocyanurate dite « PUIR », **caractérisé en ce qu'**il comprend les étapes consistant à :
- a) fournir une huile ou un mélange d'huiles dont au moins 50 % en poids des acides gras ont une chaîne carbonée en C18 ou plus et dont les acides gras présentent un indice d'iode global I_{iode} d'au moins 100 g d'I₂ / 100 g, de préférence d'au moins 125 g d'I₂ / 100 g et plus préférentiellement d'au moins 150 g d'I₂ / 100 g,
- b) époxyder au moins 50 % des doubles liaisons présentes dans ladite huile ou ledit mélange afin de former les époxydes correspondants,
- c) faire réagir directement, in situ, les huiles époxydées obtenues précédemment avec des groupements isocyanates ou diisocyanates pour obtenir des dérivés d'oxazolidones correspondants, ce sans passer par la formation intermédiaire de polyols issus des époxydes, en présence d'au moins un catalyseur adapté et d'au moins un agent gonflant, ce afin d'obtenir ladite mousse polyuréthane-modifiée isocyanurate "PUIR".

2. Procédé selon la revendication 1, **caractérisé en ce que** l'huile utilisée à l'étape a) est une huile présentant au moins 25 % en poids d'acides gras avec une chaîne carbonée en au moins C20 et dont les acides gras présentent un indice d'iode global I_{iode} d'au moins 200 g d'I₂ / 100 g.

3. Procédé selon la revendication 1 ou 2, **caractérisé en ce que** l'huile utilisée à l'étape a) comprend au moins une huile obtenue à partir d'au moins une microalgue.

4. Procédé selon la revendication 3, caractérisé en ce la ou les microalgues sont choisies dans le groupe formé par : schizochytrium sp., chlorella sp., porphyridium cruentum, pavlova et spirulina.

5. Procédé selon l'une quelconque des revendications 1 à 4, **caractérisé en ce que** l'huile utilisée à l'étape a) comprend au moins une huile végétale, de préférence de l'huile de colza, de l'huile de tournesol, de l'huile de lin et/ou de l'huile de soja.

6. Procédé selon l'une quelconque des revendications 1 à 5, **caractérisé en ce que** l'étape c) se fait à température ambiante, soit à environ 20 °C.

7. Procédé selon l'une quelconque des revendications 1 à 6, **caractérisé en ce que** l'étape b) d'époxydation se fait à chaud, à une température comprise entre 40 °C et 100 °C pendant au moins 2 heures en utilisant un mélange d'eau oxygénée et d'acide acétique.

8. Procédé selon l'une quelconque des revendications 1 à 7, **caractérisé en ce que** l'on ajoute à l'étape c) un ou plusieurs polyols extérieurs.

9. Procédé selon l'une quelconque des revendications 1 à 8, **caractérisé en ce que** les groupements isocyanates ou diisocyanates de l'étape c) sont fournis par des isocyanates ou diisocyanates aromatiques.

10. Mousse « PUIR » susceptible d'être obtenue par la mise en oeuvre du procédé selon l'une quelconque des revendications 1 à 9.

11. Mousse « PUIR » obtenue par la mise en oeuvre du procédé selon l'une quelconque des revendications 1 à 9, **caractérisée en ce qu'**elle contient au moins 10 % en masse d'une huile issue de microalgue(s).

12. Mousse « PUIR » obtenue par la mise en oeuvre du procédé selon l'une quelconque des revendications 1 à 9, **caractérisée en ce qu'**elle présente un taux de cellules fermées supérieur à 90 %.

13. Utilisation d'une mousse « PUIR » selon la revendication 10, 11 ou 12 comme matériau rigide d'isolation, en particulier comme matériau d'isolation thermique rigide pour toitures, de préférence sous forme de panneaux d'isolation thermique rigides.

## Patentansprüche

1. Verfahren zur Herstellung eines polyurethanmodifizierten Isocyanuratschaumstoffs mit der Bezeichnung "PUIR", **dadurch gekennzeichnet, dass** das Verfahren die folgenden Schritte umfasst:
a) Bereitstellen eines Öls oder einer Mischung von Ölen, von welchen mindestens 50 Gew.-% der Fettsäuren eine C18 oder höherwertigere Kohlenstoffkette aufweisen und wobei die Fettsäuren einen Gesamtiodindex I_{Iod} von mindestens 100g I₂/100g, vorzugsweise mindestens 125g I₂/100g und bevorzugter mindestens 150g I₂/100g aufweisen,
b) Epoxidieren von mindestens 50% der in dem Öl oder dem Gemisch vorhandenen Doppelbindungen, um die entsprechenden Epoxide zu bilden,
c) in situ, direktes zur Reaktion bringen der zuvor erhaltenen epoxidierten Öle mit Isocyanat- oder Diisocyanatgruppen, um entsprechende Oxazolidonderivate zu erhalten, ohne das Zwischenprodukt der aus den Epoxiden hervorgehenden Polyole zu durchlaufen, in Gegenwart mindestens eines geeigneten Katalysators und mindestens eines Treibmittels, um den polyurethanmodifzierten Isocyanurat-"PUIR"-Schaumstoff zu erhalten.

2. Verfahren nach Anspruch 1, **dadurch gekennzeichnet, dass** das in Schritt a) verwendete Öl ein Öl ist, das mindestens 25 Gew.-% Fettsäuren mit einer Kohlenstoffkette von mindestens C20 aufweist und wobei die Fettsäuren einen Gesamtiodindex I_{Iod} von mindestens 200g I₂/100g aufweisen.

3. Verfahren nach Anspruch 1 oder 2, **dadurch gekennzeichnet, dass** das in Schritt a) verwendete Öl mindestens ein aus mindestens einer Mikroalge erhaltenes Öl umfasst.

4. Verfahren nach Anspruch 3, **dadurch gekennzeichnet, dass** die Mikroalge(n) aus der Gruppe ausgewählt ist/sind, welche Schizochytrium sp., Chlorella sp., Porphyridium cruentum, Pavlova und Spirulina umfasst.

5. Verfahren nach einem der Ansprüche 1 bis 4, **dadurch gekennzeichnet, dass** das in Schritt a) verwendete Öl mindestens ein Pflanzenöl, vorzugsweise Rapsöl, Sonnenblumenöl, Leinöl und/oder Sojaöl umfasst.

6. Verfahren nach einem der Ansprüche 1 bis 5, **dadurch gekennzeichnet, dass** Schritt c) bei Raumtemperatur durchgeführt wird, das heißt bei etwa 20 °C.

7. Verfahren nach einem der Ansprüche 1 bis 6, **dadurch gekennzeichnet, dass** Schritt b) der Epoxidierung heiß, bei einer Temperatur zwischen 40 °C und 100 °C für mindestens zwei Stunden, unter Verwendung einer Mischung aus Wasserstoffperoxid und Essigsäure, durchgeführt wird.

8. Verfahren nach einem der Ansprüche 1 bis 7, **dadurch gekennzeichnet, dass** in Schritt c) ein oder mehrere Fremdpolyole beigegeben werden.

9. Verfahren nach einem der Ansprüche 1 bis 8, **dadurch gekennzeichnet, dass** die Isocyanat- oder Diisocyanatgruppen des Schritts c) durch aromatische Isocyanate oder Diisocyanate bereitgestellt werden.

10. "PUIR"-Schaumstoff, der durch das Durchführen des Verfahrens nach einem der Ansprüche 1 bis 9 erhaltbar ist.

11. "PUIR"-Schaumstoff, der durch das Durchführen des Verfahrens nach einem der Schritte 1 bis 9 erhalten wurde, **dadurch gekennzeichnet, dass** der Schaumstoff mindestens 10 Gew.-% eines aus (einer) Mikroalge(n) hervorgegangenen Öls enthält.

12. "PUIR"-Schaumstoff, der durch das Durchführen des Verfahrens nach einem der Ansprüche 1 bis 9 erhalten wurde, **dadurch gekennzeichnet, dass** der Schaumstoff einen Grad der Geschlossenzelligkeit von mehr als 90% aufweist.

13. Verwendung eines "PUIR"-Schaumstoffs nach Anspruch 10, 11 oder 12 als starres Dämmmaterial, insbesondere als starres Wärmedämmmaterial für Dächer, vorzugsweise in Form von starren Wärmedämmplatten.

## Claims

1. Method for manufacturing a polyurethane-modified isocyanurate foam, referred to as "PUIR," **characterised in that** it comprises the steps consisting of:
- a) providing an oil or a mixture of oils of which at least 50 % by weight of fatty acids have a carbon chain of C18 or more and of which the fatty acids have an overall iodine index I_{iodine} of at least 100 g of I₂/100 g, preferably at least 125 g of I₂/100 g and more preferably at least 150 g of I₂/100 g
- b) epoxidising at least 50 % of the double bonds that are present in said oil or said mixture so as to form the corresponding epoxides,
- c) directly reacting, in situ, the epoxidised oils that are obtained above with isocyanate or diisocyanate groups to obtain corresponding oxazolidone derivatives, without passing through the intermediate formation of polyols obtained from epoxides, in the presence of at least one suitable catalyst and at least one bulking agent, so as to obtain said polyurethane-modified isocyanurate foam "PUIR."

2. Method according to claim 1, **characterised in that** the oil that is used in step a) is an oil that has at least 25% by weight of fatty acids with a carbon chain of at least C20 and the fatty acids of which have an overall iodine index I_{iodine} of at least 200 g of I₂/100 g.

3. Method according to claim 1 or claim 2, **characterised in that** the oil that is used in step a) comprises at least one oil that is obtained from at least one microalga.

4. Method according to claim 3, **characterised in that** the microalga(e) is/are selected from a group that includes: schizochytrium sp., chlorella sp., porphyridium cruentum, pavlova and spirulina.

5. Method according to any of claims 1 to 4, **characterised in that** the oil that is used in step a) comprises at least one vegetable oil, preferably rapeseed oil, sunflower oil, linseed oil and/or soybean oil.

6. Method according to any of claims 1 to 5, **characterised in that** step c) is carried out at ambient temperature, or at approximately 20°C.

7. Method according to any of claims 1 to 6, **characterised in that** the epoxidation step b) is carried out under hot conditions, at a temperature of between 40°C and 100°C for at least 2 hours, using a mixture of hydrogen peroxide and acetic acid.

8. Method according to any of claims 1 to 7, **characterised in that** one or more external polyols is/are added in step c).

9. Method according to any of claims 1 to 8, **characterised in that** the isocyanate or diisocyanate groups of step c) are provided by aromatic isocyanates or diisocyanates.

10. "PUIR" foam that can be obtained by implementing the method according to any of claims 1 to 9.

11. "PUIR" foam that is obtained by implementing the method according to any of claims 1 to 9, **characterised in that** it contains at least 10% by mass of an oil that is obtained from microalga(e).

12. "PUIR" foam that is obtained by implementing the method according to any of claims 1 to 9, **characterised in that** it has a level of closed cells that is greater than 90%.

13. Use of a "PUIR" foam according to claim 10, 11 or 12 as a rigid insulation material, in particular as a rigid thermal insulation material for roofing, preferably in the form of rigid thermal insulation panels.
